# EUROPÄISCHE PATENTSCHRIFT

(11) **EP 3 716 427 B1**
(45) Veröffentlichungstag und Bekanntmachung des Hinweises auf die Patenterteilung: **09.02.2022**
(21) Anmeldenummer: 20161818.8
(22) Anmeldetag: 09.03.2020
(51) Int. Cl.: H02G 3/08, H02G 3/22, H02B 1/00

(54) **FLANSCHPLATTE FÜR DIE MONTAGE IN EINEM DURCHBRUCH EINER GEHÄUSEWAND**
FLANGE PLATE FOR MOUNTING IN AN OPENING IN A HOUSING WALL
PLAQUE DE BRIDE POUR LE MONTAGE DANS UNE PERCÉE D'UNE PAROI DE BOÎTIER

(30) Priorität: 29.03.2019 DE 202019101790 U
(43) Veröffentlichungstag der Anmeldung: 30.09.2020
(73) Patentinhaber: Rittal GmbH & Co. KG, 35745 Herborn (DE)
(72) Erfinder: Lotz, Manuel, 35585 Wetzlar (DE); Otterbach, Christoph, 57572 Niederfischbach (DE)
(74) Vertreter: Angerhausen, Christoph

(56) Entgegenhaltungen:
- NL-A- 8 901 950
- Icotek: "Cable Management Systems Product Catalog 30", https://emspartnersinc.com/, 4. April 2018 (2018-04-04), XP055708864, Gefunden im Internet: URL:https://emspartnersinc.com/wp-content/ uploads/2018/11/icotek_Catalog.pdf [gefunden am 2020-06-25] & DE 10 2009 060988 B3 (ICOTEK PROJECT GMBH & CO KG [DE]) 19. Mai 2011 (2011-05-19)
- Icotek: "Icotek - smart cable management", https://twitter.com/icotek/, 28. November 2017 (2017-11-28), XP055708898, Gefunden im Internet: URL:https://twitter.com/icotek/status/9354 74623860346880 [gefunden am 2020-06-25] & Icotek: "Icotek - smart cable management", , 28. November 2017 (2017-11-28), XP055708915, Gefunden im Internet: URL:https://twitter.com/icotek/status/9354 74623860346880/photo/1 [gefunden am 2020-06-25] & Icotek: "Icotek - smart cable management", , 28. November 2017 (2017-11-28), XP055708925, Gefunden im Internet: URL:https://twitter.com/icotek/status/9354 74623860346880/photo/2 [gefunden am 2020-06-25]
- Conta-Clip: "KABELMANAGEMENTSYSTEME", https://conta-clip.de/, 18. Dezember 2018 (2018-12-18), XP055708945, Gefunden im Internet: URL:https://conta-clip.de/fileadmin/contac lip/media/de-downloads/Kataloge_mit_Kabelm anagement/08_Kat_Kabelmanagement_DE.pdf [gefunden am 2020-06-25]
- icotek North America: "Enclosure Base Plates for Cable Entry KDR-BMP | Assembly | icotek North America", , 17. Juni 2016 (2016-06-17), Seite 1, XP054980631, Gefunden im Internet: URL:https://www.youtube.com/watch?v=7YP1o5 YWNZk [gefunden am 2020-06-25]

## Beschreibung

Die Erfindung geht aus von einer Flanschplatte für die Montage in einem Durchbruch einer Gehäusewand eines Gehäuses, wobei die Flanschplatte mindestens eine rechteckige Aufnahmemulde aufweist, die zu einer dem Durchbruch zugewandten Rückseite der Flanschplatte offen und an ihrem Außenumfang von einer Begrenzungswand umgeben ist, wobei in die Aufnahmemulde gegeneinander und umlaufend zu der Begrenzungswand abgedichtet eine Mehrzahl Dichteinsätze mit jeweils einem Leiterdurchlass eingesetzt sind. Eine derartige Flanschplatte wird von der CONTA-CLIP Verbindungstechnik GmbH unter der Handelsbezeichnung "KDS-FP Flanschplatte" vertrieben, welche im folgenden Internetkatalog vom Dezember 2018 zu sehen ist, URL:https://conta-clip.de/fileadmin/contaclip/media/ de-downloads/Kataloge_mit_Kabelmanagement/08_Kat_Kabelmanagement_DE.pdf, gefunden im Internet am 25. Juni 2020.

Die DE 20 2016 103 494 U1 beschreibt eine in Verbindung mit derartigen Flanschplatten verwendbare Kabelwanddurchführung sowie einen entsprechenden Bausatz. Eine alternative Flanschplatte für kreisrunde Kabelverschraubungen und dergleichen ist in der EP 2 106 006 B1 beschrieben. Ähnliche Kabeldurchführungen beschreiben auch die EP 2 866 322 A1, die DE 20 2008 007 905 U1, die DE 10 2009 060 988 B3 und die DE 10 2005 056 214 B3.

Die aus dem Stand der Technik bekannten Flanschplatten haben den Nachteil, dass sie nur eine geringe Variabilität hinsichtlich der verwendeten Kabeldurchführungen aufweisen und nur unter erheblichem Aufwand die nachträgliche Ergänzung einzelner Leitungen erlauben. Es ist daher die Aufgabe der Erfindung, eine Flanschplatte der eingangs beschriebenen Art derart weiterzuentwickeln, dass sie eine hohe Flexibilität hinsichtlich der Ausbildung der Kabeldurchführung aufweist und ohne hohen Aufwand nachrüstbar ist.

Diese Aufgabe wird durch eine Flanschplatte mit den Merkmalen des Anspruchs 1 gelöst. Die abhängigen Ansprüche betreffen jeweils vorteilhafte Ausführungsformen der Erfindung. Demgemäß ist unter anderem vorgesehen, dass die Flanschplatte zusätzlich mindestens eine runde Vorprägung für eine runde Kabelverschraubung oder dergleichen aufweist. Die Flanschplatte ermöglicht es somit einerseits, mit Hilfe der in die rechteckige Aufnahmemulde eingesetzten Dichteinsätze, die beispielsweise nach dem Prinzip der DE 20 2016 103 494 U1 ausgebildet sein können, einzelne Kabel oder vorkonfektionierte Kabelbündel in das Gehäuse einzuführen, wie dies grundsätzlich aus dem Stand der Technik bekannt ist. Andererseits wird mit Hilfe der mindestens einen runde Vorprägung für eine runde Kabelverschraubung auch die Verwendung von klassischen Kabelverschraubungen für die Einzeldurchführung von Leitungen möglich, wie es insbesondere erforderlich sein kann, wenn nachträglich eine weitere Leitung eingeführt werden muss, nachdem die Anordnung der in die Mulde eingesetzten Dichteinsätze bereits festgelegt ist.

Die Dichteinsätze können an einer von dem Durchbruch abgewandten Vorderseite der Flanschplatte auf einer Berandung der rechteckigen Aufnahmemulde aufliegen und an der Rückseite von einem die Aufnahmemulde überragenden Haltesteg in der Aufnahmemulde gehalten sein. An der Rückseite der Flanschplatte kann im Randbereich des rechteckigen Durchbruchs mindestens eine Steckaufnahme für die bedarfsweise Arretierung des mindestens einen Haltestegs ausgebildet sein.

Die rechteckige Aufnahmemulde ist an der Vorderseite von einer Seite verschlossen, die von einer umlaufenden, rechteckigen Vorprägung umgeben ist, wobei die Seite zusätzlich zu der rechteckigen Vorprägung weitere Vorprägungen aufweist, die den von der rechteckigen Vorprägung umschlossenen Bereich der Seite in zwei dreieckförmige und zwei trapezförmige Teilbereiche unterteilen. Dabei ist eine weitere runde Vorprägung in dem von der rechteckigen Vorprägung umschlossenen Bereich um mindestens einen von zwei Punkten herum ausgebildet, in dem die beiden trapezförmigen Teilbereiche mit einem der beiden dreieckförmigen Teilbereiche aufeinandertreffen. Mit dieser Ausführungsform wird eine weitere Erhöhung der Variabilität der rechteckigen Vorprägungen erreicht, in dem diese auch für den Anschluss von Kabelverschraubungen verwendet werden können, wenn sie lediglich insoweit ausgebrochen werden, wie sie von der runden Vorprägung umrandet sind.

Die Flanschplatte kann eine weitere runde Vorprägung aufweisen, die in dem von der rechteckigen Vorprägung umschlossenen Bereich um einen Punkt herum ausgebildet ist, der auf halber Länge einer geraden Vorprägung angeordnet ist, wobei entlang der geraden Vorprägung die beiden trapezförmigen Teilbereiche aneinandergrenzen. Eine weitere Steigerung der Variabilität der beschriebenen Flanschplatte kann dadurch erreicht werden, dass mindestens zwei der runden Vorprägungen einen unterschiedlichen Durchmesser aufweisen.

Die mindestens eine runde Vorprägung für eine Kabelverschraubung kann beabstandet von der rechteckigen Aufnahmemulde angeordnet sein. Dabei kann die Flanschplatte weiterhin eine runde Aufnahmemulde aufweisen, die an der Vorderseite der Flanschplatte von einer Seite verschlossen ist, die von der runden Vorprägung umgeben ist.

Die Flanschplatte kann mindestens zwei der runden Aufnahmemulden aufweisen, die an der Vorderseite der Flanschplatte jeweils von einer Seite verschlossen sind, die von einer runden Vorprägung umgeben ist. Weiterhin kann vorgesehen sein, dass die runden Aufnahmemulden ineinander übergehen.

Die erfindungsgemäße Flanschplatte ermöglicht es insbesondere, dass eine Kabelverschraubung über eine der runden Vorprägungen mit der Flanschplatte verbunden und eine erste Leitung über die Kabelverschraubung in das Gehäuse eingeführt ist, während mindestens eine zweite Leitung über mindestens einen der Dichteinsätze in das Gehäuse eingeführt ist.

Gemäß einem anderen Aspekt betrifft die Erfindung ein Schaltschrankgehäuse, das eine Gehäusewand mit einem Durchbruch aufweist, welcher von einer Flanschplatte der zuvor beschriebenen Art verschlossen ist. Die Flanschplatte kann den Durchbruch von der Außenseite des Schaltschrankgehäuses verschließen und dazu über ein Dichtelement im Randbereich des Durchbruchs an der Außenseite der Gehäusewand verschraubt sein.

Weitere Einzelheiten der Erfindung werden anhand der nachstehenden Figuren erläutert. Dabei zeigt:
- Figur 1: eine perspektivische Sicht auf die Vorderseite eines Schaltschrankgehäuses, das eine erfindungsgemäße Flanschplatte aufweist;
- Figur 2: eine perspektivische Sicht auf die Rückseite der Flanschplatte gemäß Figur 1; und
- Figur 3: eine Draufsicht auf die Vorderseite der Flanschplatte gemäß den Figuren 1 und 2.

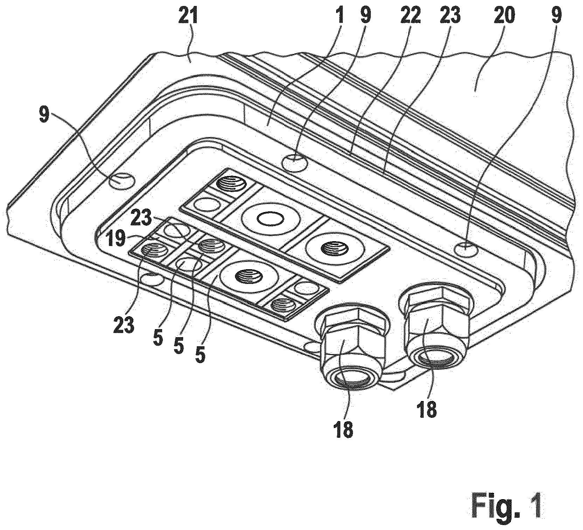

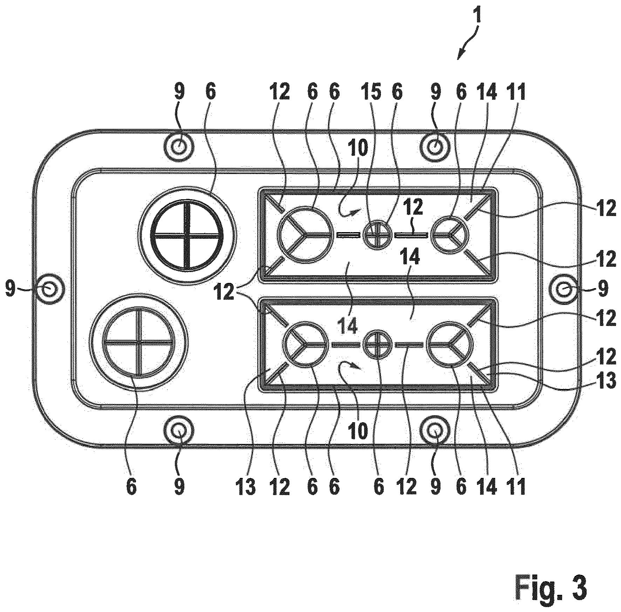

Die Figuren 1 bis 3 zeigen eine beispielhafte Ausführungsform einer erfindungsgemäßen Flanschplatte 1, die an der Unterseite eines Schaltschrankgehäuses 20 montiert ist. Die Unterseite ist eine außenliegende Gehäusewand 21 des Schaltschrankgehäuses 20, die einen Durchbruch 22 aufweist, der von der Flanschplatte 1 verschlossen ist. Die Flanschplatte 1 verschließt den Durchbruch 22 von der Außenseite des Gehäuses 20 und ist dazu über ein Dichtelement 23 im Randbereich des Durchbruchs 22 an der Außenseite der Gehäusewand 21 verschraubt, wozu am Außenumfang der Flanschplatte 1 Befestigungsmittel 9 vorgesehen sind.

Die Flanschplatte 1 weist zwei rechteckige Aufnahmemulden 2 auf, die zu der dem Durchbruch 22 zugewandten Rückseite 3 der Flanschplatte 1 offen sind. Die Aufnahmemulden 2 sind an ihrem Außenumfang von einer rechteckigen Begrenzungswand 4 umgeben, die senkrecht zu der Rückseite 3 und der Vorderseite 7 der Flanschplatte 1 steht. In die Aufnahmemulde 2 sind über Trennstege 19 voneinander abgegrenzt eine Mehrzahl Dichteinsätze 5 mit jeweils einem Leiterdurchlass eingesetzt. Der modulare Aufbau der Dichteinsätze unter Verwendung von die Dichteinsätze separierenden Trennstegen 19 ist grundsätzlich aus der DE 20 2016 103 494 U1 bekannt. Die Mehrzahl Dichteinsätze 5 sind somit über die Trennstege 19 gegeneinander und zu der Begrenzungswand 4 durch unmittelbare Anlage abgedichtet. Erfindungsgemäß weist die Flanschplatte 1 weiterhin mindestens eine runde Vorprägung 6 und im vorliegenden Fall zwei runde Vorprägungen 6 für die Montage einer Kabelverschraubung 18 auf. Die runden Vorprägung 6 sind beabstandet von den rechteckigen Vorprägungen 11 und Mulden 2 angeordnet.

Während die modular aufgebauten Dichteinsätze 5 dazu verwendet werden können, um in der aus dem Stand der Technik bekannten Weise vorkonfektionierte Leiterbündel in das Gehäuse 20 einzuführen, erlauben es die Kabelverschraubungen 18 individuell einzelne Leitungen gegebenenfalls auch nachträglich in das Gehäuseinnere einzuleiten, ohne dass dafür der komplexe Aufbau der über die Trennstege 19 separierten und modular zusammengesetzten Dichteinsätze 5 geändert werden muss.

Die rechteckige Aufnahmemulde 2 ist an der Vorderseite 7 von einer Seite 10 verschlossen, die von der umlaufenden, im Wesentlichen rechteckigen Vorprägung 11 umgeben ist. Zusätzlich zu der rechteckigen Vorprägung 11 weist die Seite 10 weitere Vorprägungen 12 auf, die den von der rechteckigen Vorprägung 11 umschlossenen Bereich der Seite 10 in zwei dreieckförmige Teilbereiche 13 und zwei trapezförmige Teilbereiche 14 unterteilt. Darüber hinaus sind drei weitere runde Vorprägungen 6 vorgesehen, von denen die beiden äußeren runden Vorprägungen 6 in dem von der rechteckigen Vorprägung 11 umschlossenen Bereich um jeweils einen von zwei Punkten herum ausgebildet sind, in dem die beiden trapezförmigen Teilbereiche 14 mit einem der beiden dreieckförmigen Teilbereiche 13 aufeinandertreffen.

Die mittlere runde Vorprägung 6 in dem von der rechteckigen Vorprägung 11 umschlossenen Bereich ist um einen Punkt herum auf halber Länge der geraden Vorprägung 15 ausgebildet, entlang welcher die beiden trapezförmigen Teilbereiche 14 aneinandergrenzen.

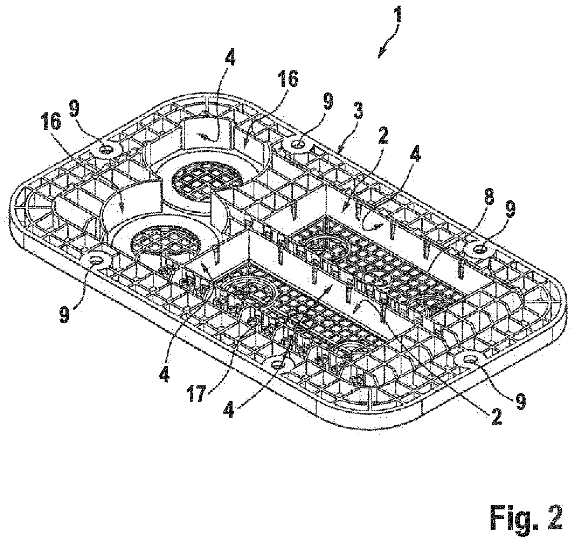

Die beiden runden Vorprägungen 6, die außerhalb der rechteckigen Vorprägung 11 liegen, sind beabstandet von den rechteckigen Aufnahmemulden 2 angeordnet. Für diese beiden runden Vorprägungen 6 weist die Flanschplatte 1 jeweils eine runde Aufnahmemulde 16 auf, die an der Vorderseite 7 der Flanschplatte 1 von einer Seite verschlossen ist, die von der jeweiligen runden Vorprägung 6 umgeben ist. Die Ansicht gemäß Figur 2 lässt weiterhin erkennen, dass die runden Aufnahmemulden 16 analog zu den rechteckigen Aufnahmemulden 2 zu der Rückseite 3 der Flanschplatte 1 offen und von vertikalen Begrenzungswänden 4 begrenzt sind.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Flanschplatte
- 2: rechteckige Aufnahmemulde
- 3: Rückseite
- 4: Begrenzungswand
- 5: Dichteinsatz
- 6: runde Vorprägung
- 7: Vorderseite
- 8: Berandung
- 9: Befestigungsmittel
- 10: Seite
- 11: rechteckige Vorprägung
- 12: weitere Vorprägung
- 13: dreieckförmiger Teilbereich
- 14: trapezförmiger Teilbereich
- 15: gerade Vorprägung
- 16: runde Aufnahmemulde
- 17: Rastverbinder
- 18: Kabelverschraubung
- 19: Trennsteg
- 20: Schaltschrankgehäuse
- 21: Gehäuserand
- 22: Durchbruch
- 23: Dichtelement

## Patentansprüche

1. Flanschplatte (1) für die Montage in einem Durchbruch (22) einer Gehäusewand (21) eines Gehäuses (20), wobei die Flanschplatte (1) mindestens eine rechteckige Aufnahmemulde (2) aufweist, die zu einer dem Durchbruch (22) zugewandten Rückseite (3) der Flanschplatte (1) offen und an ihrem Außenumfang von einer Begrenzungswand (4) umgeben ist, wobei in die Aufnahmemulde (2) gegeneinander und umlaufend zu der Begrenzungswand (4) abgedichtet eine Mehrzahl Dichteinsätze (5) mit jeweils einem Leiterdurchlass eingesetzt sind, wobei die Flanschplatte (1) weiterhin mindestens eine runde Vorprägung (6) für eine Kabelverschraubung (18) aufweist, wobei die rechteckige Aufnahmemulde (2) an der Vorderseite (7) von einer Seite (10) verschlossen ist, die von einer umlaufenden, rechteckigen Vorprägung (11) umgeben ist, wobei die Seite (10) zusätzlich zu der rechteckigen Vorprägung (11) weitere Vorprägungen (12) aufweist, die den von der rechteckigen Vorprägung (11) umschlossenen Bereich der Seite (10) in zwei dreieckförmige (13) und zwei trapezförmige Teilbereiche (14) unterteilen, **dadurch gekennzeichnet, dass** eine weitere runde Vorprägung (6) in dem von der rechteckigen Vorprägung (11) umschlossenen Bereich um mindestens einen von zwei Punkten herum ausgebildet ist, in dem die beiden trapezförmigen Teilbereiche (14) mit einem der beiden dreieckförmigen Teilbereiche (13) aufeinander treffen.

2. Flanschplatte (1) nach Anspruch 1, bei der die Dichteinsätze (5) an einer von dem Durchbruch abgewandten Vorderseite (7) der Flanschplatte (1) auf einer Berandung (8) der rechteckige Aufnahmemulde (2) aufliegen und an der Rückseite (3) von einem die Aufnahmemulde (2) überragenden Haltesteg in der Aufnahmemulde (2) gehalten sind.

3. Flanschplatte (1) nach Anspruch 1, bei der eine weitere runde Vorprägung (6) in dem von der rechteckigen Vorprägung (11) umschlossenen Bereich um einen Punkt herum auf halber Länge einer geraden Vorprägung (15) ausgebildet ist, entlang der die beiden trapezförmigen Teilbereiche (14) aneinander grenzen.

4. Flanschplatte (1) nach einem der vorangegangenen Ansprüche, bei der mindestens zwei der runden Vorprägungen (6) einen unterschiedlichen Durchmesser aufweisen.

5. Flanschplatte (1) nach einem der vorangegangenen Ansprüche, bei der die mindestens eine runde Vorprägung (6) für eine Kabelverschraubung (18) beabstandet von der rechteckigen Aufnahmemulde (2) angeordnet ist, wobei die Flanschplatte (1) weiterhin eine runde Aufnahmemulde (16) aufweist, die an der Vorderseite (7) der Flanschplatte (1) von einer Seite verschlossen ist, die von der runden Vorprägung (6) umgeben ist.

6. Flanschplatte (1) nach Anspruch 5, die mindestens zwei der runden Aufnahmemulden (16) aufweist, die an der Vorderseite (7) der Flanschplatte (1) jeweils von einer Seite verschlossen sind, die von einer runden Vorprägung (6) umgeben ist, wobei die runden Aufnahmemulden (16) ineinander übergehen.

7. Schaltschrankgehäuse (20), das eine Gehäusewand (21) mit einem Durchbruch (22) aufweist, welcher von einer Flanschplatte (1) nach einem der vorangegangen Ansprüche verschlossen ist, wobei die Flanschplatte (1) den Durchbruch (22) von der Außenseite des Schaltschrankgehäuses (20) verschließt und dazu über ein Dichtelement (23) im Randbereich des Durchbruchs (22) an der Außenseite der Gehäusewand (21) verschraubt ist.

## Claims

1. A flange plate (1) for mounting in an opening (22) in a housing wall (21) of a housing (20), the flange plate (1) having at least one rectangular receiving trough (2) which is open towards a rear side (3) of the flange plate (1) facing the opening (22) and is surrounded on its outer circumference by a boundary wall (4), wherein a plurality of sealing inserts (5), each having a conductor aperture, are inserted into the receiving trough (2) in a sealed manner with respect to one another and circumferentially with respect to the boundary wall (4), wherein the flange plate (1) further has at least one round pre-embossing (6) for a cable gland (18), wherein the rectangular receiving trough (2) is closed at the front side (7) by a side (10) which is surrounded by a circumferential, rectangular pre-embossing (11), the side (10) having, in addition to the rectangular pre-embossing (11), further pre-embossings (12) which subdivide the region of the side (10) surrounded by the rectangular pre-embossing (11) into two triangular (13) and two trapezoidal subregions (14), **characterized in that** a further circular pre-embossing (6) is formed in the region enclosed by the rectangular pre-embossing (11) around at least one of two points where the two trapezoidal sub-regions (14) meet with one of the two triangular sub-regions (13).

2. The flange plate (1) according to claim 1, in which the sealing inserts (5) rest on a rim (8) of the rectangular receiving trough (2) on a front side (7) of the flange plate (1) facing away from the aperture and are held in the receiving trough (2) on the rear side (3) by a retaining web projecting beyond the receiving trough (2).

3. The flange plate (1) as claimed in claim 1, wherein a further circular pre-embossing (6) is formed in the area enclosed by the rectangular pre-embossing (11) around a point halfway along a straight pre-embossing (15) along which the two trapezoidal sub-regions (14) adjoin each other.

4. The flange plate (1) according to any one of the preceding claims, wherein at least two of the circular pre-embossings (6) have a different diameter.

5. The flange plate (1) according to any one of the preceding claims, wherein the at least one round pre-embossing (6) for a cable gland (18) is arranged at a distance from the rectangular receiving trough (2), the flange plate (1) further comprising a round receiving trough (16) closed at the front side (7) of the flange plate (1) from a side surrounded by the round pre-embossing (6).

6. The flange plate (1) according to claim 5, comprising at least two of said circular receiving troughs (16) closed at the front side (7) of said flange plate (1) each by a side surrounded by a circular pre-embossing (6), said circular receiving troughs (16) merging into each other.

7. A switchgear cabinet housing (20), which has a housing wall (21) with an opening (22) which is closed by a flange plate (1) according to one of the preceding claims, the flange plate (1) closing the opening (22) from the outside of the switchgear cabinet housing (20) and for this purpose being screwed to the outside of the housing wall (21) via a sealing element (23) in the edge region of the opening (22).

## Revendications

1. Plaque à bride (1) pour le montage dans une traversée (22) d'une paroi de boîtier (21) d'un boîtier (20), la plaque à bride (1) comportant au moins une cuvette de réception (2) rectangulaire qui est ouverte vers un côté arrière (3) de la plaque à bride (1) tourné vers la traversée (22) et qui est entourée d'une paroi de limitation (4) au niveau de son pourtour extérieur, une pluralité d'inserts d'étanchéité (5) avec chacun un passage de conducteur étant insérés dans la cuvette de réception (2) de façon périphérique par rapport à la paroi de limitation (4) et en étant rendus étanches les uns vis-à-vis des autres, la plaque à bride (1) comportant en outre au moins un pré-estampage (6) rond pour un presse-étoupe (18), la cuvette de réception (2) rectangulaire étant, sur le côté avant (7), obturée par un côté (10) qui est entouré d'un pré-estampage (11) périphérique rectangulaire, le côté (10) comportant, en plus du pré-estampage (11) rectangulaire, d'autres pré-estampages (12) qui divisent en deux zones partielles triangulaires (13) et deux zones partielles trapézoïdales (14) la zone du côté (10) entourée du pré-estampage (11) rectangulaire, **caractérisée en ce qu'**un autre pré-estampage (6) rond est constitué dans la zone entourée du pré-estampage (11) rectangulaire tout autour d'au moins un de deux points dans laquelle les deux zones partielles trapézoïdales (14) rencontrent une des deux zones partielles triangulaires (13).

2. Plaque à bride (1) selon la revendication 1, dans laquelle les inserts d'étanchéité (5), sur un côté avant (7) de la plaque à bride (1) éloigné de la traversée, reposent sur une bordure (8) de la cuvette de réception (2) rectangulaire et sont, sur le côté arrière (3), retenus dans la cuvette de réception (2) par une barrette de retenue dépassant de la cuvette de réception (2).

3. Plaque à bride (1) selon la revendication 1, dans laquelle un autre pré-estampage (6) rond est constitué dans la zone entourée du pré-estampage (11) rectangulaire tout autour d'un point sur la demi-longueur d'un pré-estampage (15) rectiligne le long duquel les deux zones partielles trapézoïdales (14) sont contiguës l'une à l'autre.

4. Plaque à bride (1) selon l'une des revendications précédentes, dans laquelle au moins deux des pré-estampages (6) ronds présentent un diamètre différent.

5. Plaque à bride (1) selon l'une des revendications précédentes, dans laquelle l'au moins un pré-estampage (6) rond pour un presse-étoupe (18) est disposé à distance de la cuvette de réception (2) rectangulaire, la plaque à bride (1) comportant en outre un pré-estampage (16) rond qui, sur le côté avant (7) de la plaque à bride (1), est obturé par un côté qui est entouré du pré-estampage (6) rond.

6. Plaque à bride (1) selon la revendication 5, qui comporte au moins deux des cuvettes de réception (16) rondes qui, sur le côté avant (7) de la plaque à bride (1), sont respectivement obturées par un côté qui est entouré d'un pré-estampage (6) rond, les cuvettes de réception (16) rondes se fondant l'une dans l'autre.

7. Boîtier d'armoire de commande (20), qui comporte une paroi de boîtier (21) avec une traversée (22) qui est obturée par une plaque à bride (1) selon l'une des revendications précédentes, la plaque à bride (1) obturant la traversée (22) extérieur du boîtier d'armoire de commande (20) et étant en plus vissée sur le côté extérieur de la paroi de boîtier (21) par le biais d'un élément d'étanchéité (23) dans la zone de bord de la traversée (22).
